(19) Europäisches Patentamt
European Patent Office
Office européen des brevets

(11) **EP 3 299 188 A1**

(12) **EUROPEAN PATENT APPLICATION**

(43) Date of publication:
**28.03.2018 Bulletin 2018/13**

(51) Int Cl.:
***B60C 23/12*** (2006.01)

(21) Application number: **17191690.1**

(22) Date of filing: **18.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.09.2016 US 201662398981 P**

(71) Applicant: **The Goodyear Tire & Rubber Company
Akron, OH 44316 (US)**

(72) Inventors:
• **LIN, Cheng-Hsiung
Hudson, OH 44236 (US)**
• **GOPALA, Arun Kumar Byatarayanapura
Copley, OH 44321 (US)**

(74) Representative: **Kutsch, Bernd
Goodyear S.A.
Patent Department
Avenue Gordon Smith
7750 Colmar-Berg (LU)**

(54) **TIRE ASSEMBLY WITH A MODIFIED VALVE STEM**

(57) An air maintenance tire assembly is disclosed, the assembly comprising a tire (15) having a tire cavity (102) bounded by first and second sidewalls extending to a tire tread region; and air pumping means (110, 120) for generating pressurized air for maintaining air pressure within the tire cavity (102) at a preset pressure level. The air maintenance tire assembly comprises a valve stem assembly (300) projecting outward from the tire cavity (102) and having an internal air passageway in communication with the tire cavity (102) and operative to direct pressurized air into the cavity (102). The valve stem assembly (300) further comprises at least one second air passageway (314) having an inlet end in fluid communication with the outside air and an outlet end in fluid communication with the air pumping means (110, 120).

FIG. 1

EP 3 299 188 A1

## Description

Field of the Invention

The present invention relates generally to an air maintenance system for use with a tire and, more specifically, to an air maintenance pumping assembly.

Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will maintain air pressure within the tire in order to compensate for any reduction in tire pressure over time without the need for driver intervention.

Definitions

"Axial" and "axially" means lines or directions that are parallel to the axis of rotation of the tire or the rim.
"Circumferential" means lines or directions extending along the perimeter of the surface of the annular tread perpendicular to the axial direction.
"Lateral" means an axial direction.
"Radial" and "radially" means directions radially toward or away from the axis of rotation of the tire or the rim.

Summary of the Invention

The invention relates to an air maintenance tire assembly in accordance with claim 1 and to a pneumatic tire and rim assembly in accordance with claim 7.
Dependent claims refer to preferred embodiments of the invention.
One or more embodiments of the present invention provide an air maintenance tire assembly comprising a tire having a tire cavity bounded by first and second sidewalls extending to a tire tread region, air pumping means for generating pressurized air for maintaining air pressure within the tire cavity at a preset pressure level, the tire having a valve stem projecting outward from the tire cavity and having an internal air passageway in communication with the tire cavity and operative to direct pressurized air into the cavity, and said valve stem further comprising a second air passageway having an inlet end in fluid communication with the outside air and an outlet end in fluid communication with the air pumping means.

One or more embodiments of the present invention provide an air maintenance tire assembly comprising a tire having a tire cavity bounded by first and second sidewalls extending to a tire tread region, air pumping means for generating pressurized air for maintaining air pressure within the tire cavity at a preset pressure level, the tire having a valve stem projecting outward from the tire cavity and having an internal air passageway in communication with the tire cavity and operative to direct pressurized air into the cavity, and said valve stem further comprising a second air passageway having an inlet end in fluid communication with the outside air and an outlet end in fluid communication with the air pumping means, and further including a connector mounted upon a first end of the valve body, wherein the first end is positioned within the tire cavity, wherein the connector has an internal channel in fluid communication with the second internal flow passageway.
One or more embodiments of the present invention provide an air maintenance tire assembly comprising a tire having a tire cavity bounded by first and second sidewalls extending to a tire tread region, air pumping means for generating pressurized air for maintaining air pressure within the tire cavity at a preset pressure level, the tire having a valve stem projecting outward from the tire cavity and having an internal air passageway in communication with the tire cavity and operative to direct pressurized air into the cavity, and said valve stem further comprising a second air passageway having an inlet end in fluid communication with the outside air and an outlet end in fluid communication with the air pumping means, further including a connector mounted upon a first end of the valve body, wherein the first end is positioned within the tire cavity, wherein the connector has an internal channel in fluid communication with the second internal flow passageway, and wherein the connector further includes a filter positioned within the internal channel for filtering the outside air.
One or more embodiments of the present invention provide an air maintenance tire assembly comprising a tire having a tire cavity bounded by first and second sidewalls extending to a tire tread region, air pumping means for generating pressurized air for maintaining air pressure within the tire cavity at a preset pressure level, the tire having a valve stem projecting outward from the tire cavity and having an internal air passageway in communication with the tire cavity and operative to direct pressurized air into the cavity, and said valve stem further comprising a second air passageway having an inlet end in fluid communication with the outside air and an outlet end in fluid communication with the air pumping means, and wherein the pump assembly further including a first and second pump each mounted to a wheel rim of the rim assembly, said first and second pump each having a piston mounted in a chamber, an external mass being connected to each piston, wherein said external mass operates the pump assemblies during rotation of the tire.

One or more embodiments of the present invention provide an air maintenance tire assembly comprising a tire having a tire cavity bounded by first and second sidewalls extending to a tire tread region, air pumping means for generating pressurized air for maintaining air pressure within the tire cavity at a preset pressure level, the tire having a valve stem projecting outward from the tire cavity and having an internal air passageway in communication with the tire cavity and operative to direct pressurized air into the cavity, and said valve stem further comprising a second air passageway having an inlet end in fluid communication with the outside air and an outlet end in fluid communication with the air pumping means, and wherein the first and second pump assembly are connected in series.

One or more embodiments of the present invention provide an air maintenance tire assembly comprising a tire having a tire cavity bounded by first and second sidewalls extending to a tire tread region, air pumping means for generating pressurized air for maintaining air pressure within the tire cavity at a preset pressure level, the tire having a valve stem projecting outward from the tire cavity and having an internal air passageway in communication with the tire cavity and operative to direct pressurized air into the cavity, and said valve stem further comprising a second air passageway having an inlet end in fluid communication with the outside air and an outlet end in fluid communication with the air pumping means, and wherein a check valve is provided between the first and second pump assembly.

Brief Description of the Drawings

The invention will be described by way of example and with reference to the accompanying drawings in which:

Figure 1 illustrates a schematic sectional view of part of a tire in accordance with the present invention.
Figure 2 illustrates a close-up perspective view of a pump of the present invention.
Figure 3 illustrates the pump system of Figure 1 shown with the components in cross-section.
Figure 4 illustrates a double channel connector of the present invention.
Figure 5 illustrates a cross-sectional view of the double channel connector of the present invention.
Figure 6 illustrates an exploded view of the double channel connector of the present invention.
Figure 7 illustrates a schematic of a first embodiment of a pump system of the present invention utilizing two double chamber pumps operated by an external mass.
Figure 8 illustrates a schematic of a second embodiment of a pump system of the present invention utilizing two single chamber pumps operated by an external mass.
Figure 9A illustrates a perspective view of a third embodiment of a pump system of the present invention, while Figure 9B illustrates the bottom view of Figure 9A.

Detailed Description of Example Embodiments of the Invention

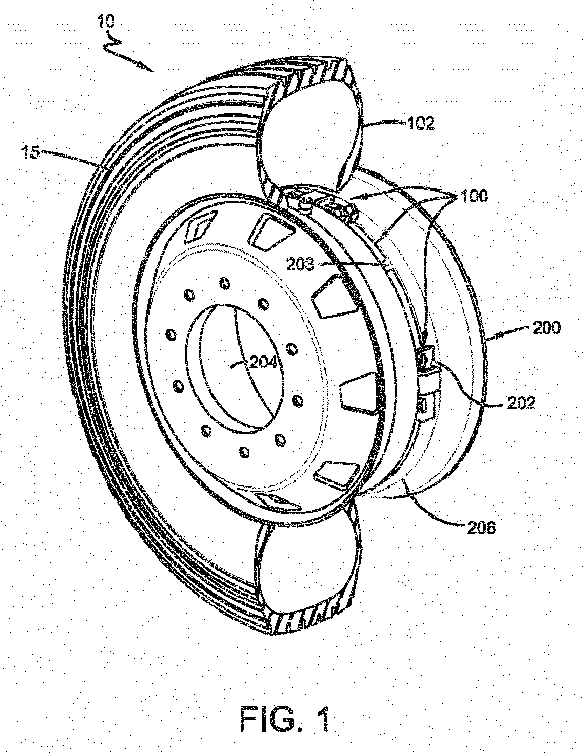

An embodiment of the present invention is directed to an air maintenance system 10 as shown in Figure 1. The air maintenance system 10 includes one or more pump assemblies 100 that may be used to pump air to a tire. The tire may be a conventional tire that mounts in conventional fashion to a rim 200 comprising a pair of rim mounting surfaces 204 and a rim body 206. The rim 200 supports the tire assembly. Preferably, the tire is of conventional construction, having a pair of sidewalls extending from opposite bead areas to a crown or tire bead region. The tire 15 and the rim 200 enclose a tire cavity 102.

The pump assembly 100 of the present invention is mounted to an inner surface 202 of the tire rim 200 that is located inside the tire cavity 102. The rim may preferably comprise a U-shaped groove 203 for mounting the pump assembly 100. The pump assembly may alternatively be located on the outer rim surface 204, opposite the inner surface 202.

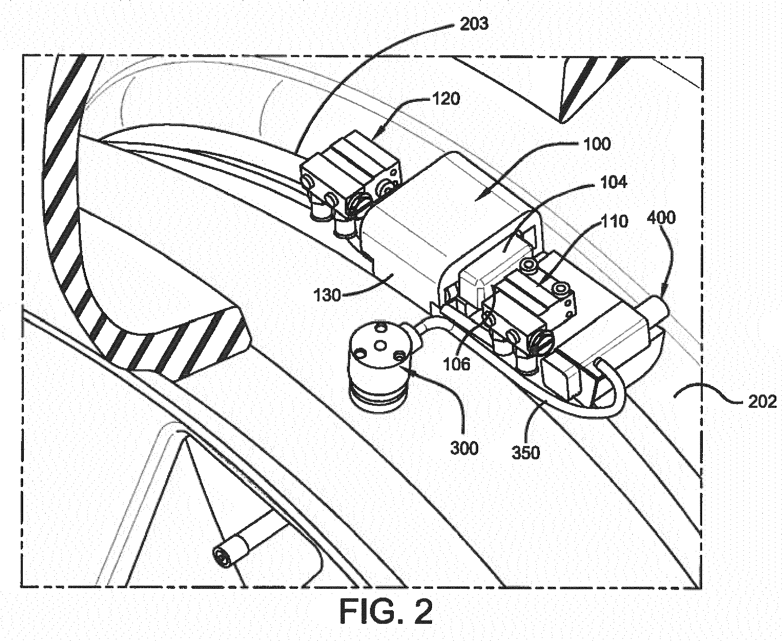

The pump assembly 100 as shown in Figures 2-3, includes an external sliding mass 104. The external sliding mass 104 has a first end 106 connected to a first piston 108 of a first pump 110. The sliding mass 104 has a second end 112 connected to a second piston 114 of a second pump 120. The sliding mass 104 preferably slides in a linear direction, and may be mounted in a groove or track 122 of a mounting sleeve 130. More preferably, the sliding mass 104 has wheels or bearings 140 to reduce the friction of the sliding mass 103 within the track 122. When the sliding mass slides, the pistons 108, 114 compress the air in the chambers.

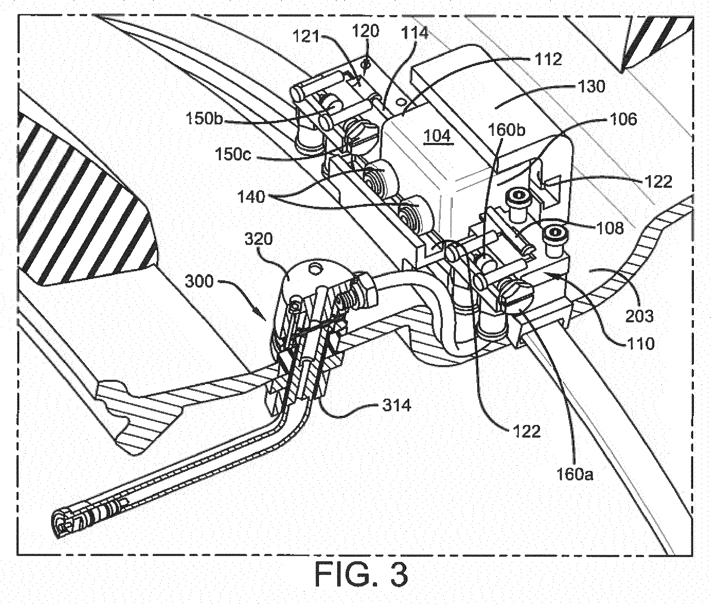

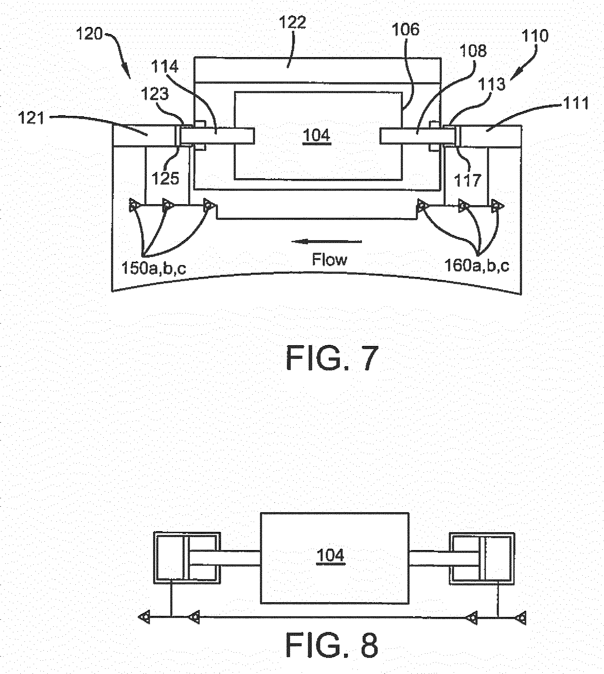

Preferably, each pump 110, 120 is a double chamber pump having two chambers. Thus, first pump 110 has first pump chamber 111 and second pump chamber 113. The second pump 120 has first pump chamber 121 and second pump chamber 123. Each piston 108, 114 forms a seal to allow for the two internal chambers of each pump. Figures 3 and 7 illustrate that each pump 110, 120 is preferably in fluid communication with one or more check valves 150, 160. As shown in Figure 7, the direction of flow is shown from right to left. Preferably, a check valve 160c is located upstream of the first chamber 111 of the first pump 110. Flow from the first pump chamber is directed into the second pump chamber 113 (i.e., the chambers are connected in series). Preferably, an optional check valve 160b is located between the first chamber 111 and the second chamber 113. Preferably, an optional check valve 160a is located downstream of the second chamber 113. Flow from the second chamber 113 of the first pump 110 is then directed to the second chamber 123 of the second pump 120. Preferably, an optional check valve 150c is located upstream of the first chamber. The flow is then directed from the second chamber 123 of the second pump into the first chamber 121 of the second pump. An optional check valve 150b is preferably located in the flow path between the two chambers. Flow from the first chamber 121 is then directed through an optional check valve 150a. If only one pump assembly 100 is used, then the output flow from the pump assembly 100 is directed into the tire cavity.

Preferably, there are at least two pump assemblies 100 connected in series.

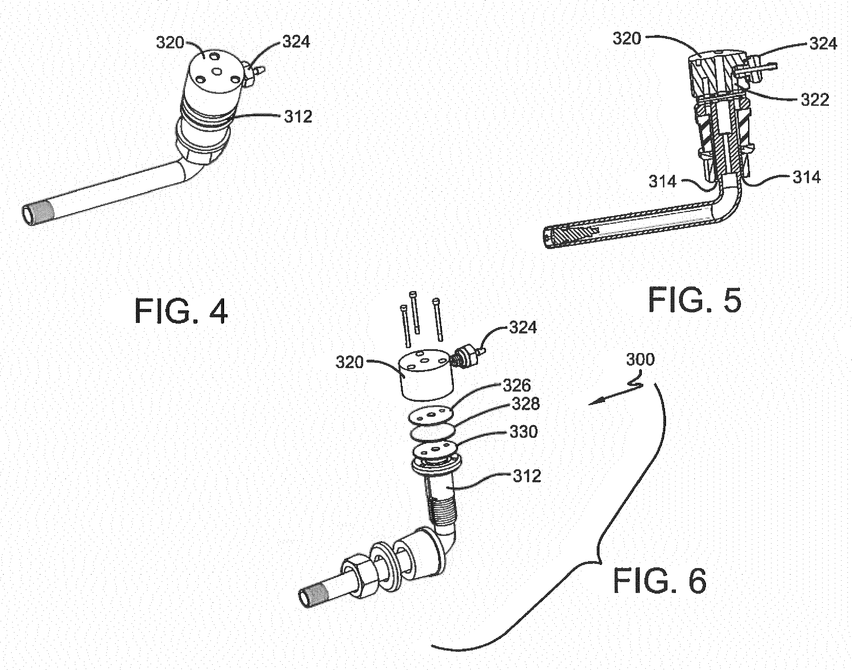

Airflow is introduced into the pump assembly 100 via a modified valve stem assembly 300. The pump assembly 100 may optionally include an inlet control valve 400 that opens flow to the pump system when the tire cavity pressure is below a threshold set pressure. The modified valve stem assembly 300 in shown in Figures 4-6. The modified valve stem assembly 300 provides air from the outside to be pumped in the pump assemblies 100. The modified valve stem assembly allows the standard valve stem function to allow air to be filled in the tire the conventional way and also allows for the tire pressure to be checked in the conventional way. The valve stem body 312 has been modified to include one or more (additional) passageways 314 that communicate outside air through the body 312 and into flow channels 322 of a double channel connector 320. As the outside air travels through the passageways 314, it is filtered by filter 328. A first and second gasket 326, 330 prevents leakage. The double channel connector 320 has an adaptor 324 for connecting to a tube 350. The tube 350 is preferably connected to an inlet control valve 400. The inlet control valve senses the tire cavity pressure, and if the cavity pressure is below the threshold level, the inlet control valve allows the air to pass through to the pump assemblies 100. If the tire pressure is above the threshold, the inlet control valves remains closed.

Preferably, there are at least two pump assemblies 100 connected together, i.e., in series. Due to an amplification effect, the compression of the pump assembly may be defined as:

$$R = (r)^{2n}$$

*where*

R: system compression ratio
r: single chamber compression ratio
n: number of pump in the system

Thus, a high compression ratio for each pump chamber is not necessary to achieve a high compression ratio (e.g., low force and/or deformation may produce high compression).

The pump assembly of the present invention is bi-directional. Hence, the rotation direction or installation direction will not have significant effect on pumping performance.

The pump driving mechanism of the present invention is based on gravitation change of the external mass during tire rotation. As the wheel is rotated, the pistons move forward and backward per revolution that provided high pumping frequency. Higher vehicle speed provides higher pumping frequency. The pumping action only depends on the external mass, and will not be affected by tire load or any other external conditions.

Figure 8 is an alternate embodiment of the present invention. Instead of each pump having a dual chamber, the invention may also provide for single chamber pumps which are driven by an external mass. Two single chamber pumps are connected together in series, and are driven by a single external mass that drives the pistons to compress the air in the respective chambers. Check valves may be used as shown to prevent backflow.

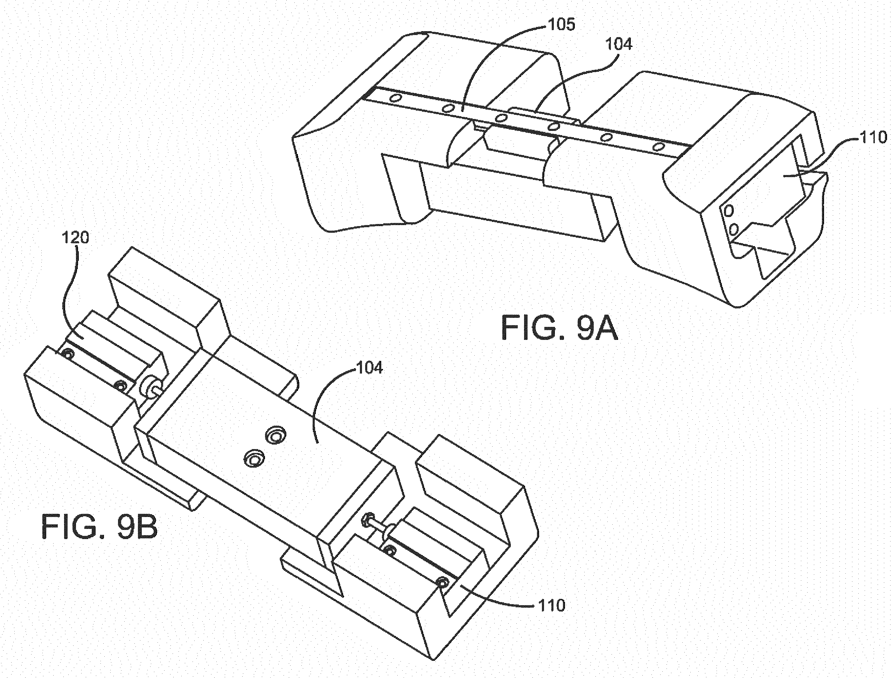

Figures 9A and 9B illustrate an alternate embodiment of the present invention in which a sliding weight 104 is mounted upon a rail 105, so that the motion of the sliding weight is constrained in a linear direction.

**Claims**

1. An air maintenance tire assembly comprising:

   a tire (15) having a tire cavity (102) bounded by first and second sidewalls extending to a tire tread region; and
   air pumping means (110, 120) for generating pressurized air for maintaining air pressure within the tire cavity (102) at a preset pressure level; wherein the air maintenance tire assembly comprises a valve stem assembly (300) projecting outward from the tire cavity (102) and having an internal air passageway in communication with the tire cavity (102) and operative to direct pressurized air into the cavity (102); and wherein the valve stem assembly (300) further comprises at least one second air passageway (314) having an inlet end in fluid communication with the outside air and an outlet end in fluid communication with the air pumping means (110, 120).

2. The air maintenance tire assembly of claim 1 further including a connector (320) mounted upon a first end of a valve body, wherein the first end is positioned within the tire cavity (102), wherein the connector (320) has at least one internal channel in fluid communication with the second air passageway (314).

3. The air maintenance tire assembly of claim 2 wherein the connector (320) further includes a filter (328) positioned within the internal channel for filtering the outside air.

**4.** The air maintenance tire assembly of at least one of the previous claims comprising a first and a second pump assembly (110, 120) mounted to a wheel rim (200), the first pump assembly (110) and second pump assembly (120) each having a piston (108, 114) mounted in a chamber (111, 121), and an external mass (104) being connected to each piston (108, 114), wherein the external mass (104) is configured to operates the pump assemblies (110, 120) during rotation of the rim (200).

**5.** The air maintenance tire assembly of at least one of the previous claims wherein the first and the second pump assembly (110, 120) are connected in series.

**6.** The air maintenance tire assembly of at least one of the previous claims wherein a check valve (150a, 150b, 160a, 160b, 160c) is provided between the first and the second pump assembly (110, 120).

**7.** A pneumatic tire and rim assembly comprising a pump assembly (110, 120) mounted within the tire cavity (102), the pump assembly (110, 120) having an outlet in fluid communication with the tire cavity (102) and an inlet connected to a valve stem assembly (300), the valve stem assembly (300) having a valve body having a first and a second internal flow passageway (314), the first internal flow passageway being in fluid communication with the tire cavity (102) and a valve core, and the second internal flow passageway (314) being in fluid communication with the air outside of the tire (15) and the inlet of the pump assembly (110, 120).

FIG. 1

FIG. 2

FIG. 3

FIG. 4

FIG. 5

FIG. 6

FIG. 7

FIG. 8

FIG. 9A

FIG. 9B

Europäisches
Patentamt

European
Patent Office

Office européen
des brevets

# EUROPEAN SEARCH REPORT

Application Number

EP 17 19 1690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 95/19271 A1 (VERTIGO INC [US]) 20 July 1995 (1995-07-20) * page 9, line 5 - page 10, line 4; figures 1-3,6 * * page 11 * | 1-5,7 | INV. B60C23/12 |
| X | US 2010/282388 A1 (KELLY STEVEN JEROME [US]) 11 November 2010 (2010-11-11) * figures 1-16 * | 1,6 | |
| X | EP 1 733 902 A2 (DELPHI TECH INC [US]) 20 December 2006 (2006-12-20) * figures 5,6 * | 1 | |

TECHNICAL FIELDS
SEARCHED      (IPC)

B60C

The present search report has been drawn up for all claims

| Place of search | Date of completion of the search | Examiner |
|---|---|---|
| Munich | 9 January 2018 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 1690

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2018

| Patent document cited in search report | | Publication date | Patent family member(s) | | Publication date |
|---|---|---|---|---|---|
| WO 9519271 | A1 | 20-07-1995 | EP | 0737134 A1 | 16-10-1996 |
| | | | JP | H09508870 A | 09-09-1997 |
| | | | US | 5556489 A | 17-09-1996 |
| | | | WO | 9519271 A1 | 20-07-1995 |
| US 2010282388 | A1 | 11-11-2010 | US | 2010282388 A1 | 11-11-2010 |
| | | | WO | 2010129735 A1 | 11-11-2010 |
| EP 1733902 | A2 | 20-12-2006 | AT | 440740 T | 15-09-2009 |
| | | | EP | 1733902 A2 | 20-12-2006 |
| | | | US | 2006283534 A1 | 21-12-2006 |

EPO FORM P0459

For more details about this annex : see Official Journal of the European Patent Office, No. 12/82